# EUROPEAN PATENT APPLICATION

(11) **EP 2 680 058 A1**
(43) Date of publication of application: **01.01.2014**
(21) Application number: 13173914.6
(22) Date of filing: 27.06.2013
(51) Int. Cl.: G02B 21/16, G01N 21/64, G01N 21/95

(54) **Apparatus for measuring quality of gallium nitride**

(30) Priority: 27.06.2012 KR 20120069136
(71) Applicant: Samsung Corning Precision Materials Co., Ltd., Gyeongsangbuk-do Gumi-si, 730-735 (KR)
(72) Inventor: Bae, JunYoung, 336-841 Asan-si (KR); Choi, JunSung, 336-841 Asan-si (KR); Kim, Joon Hoi, 336-841 Asan-si (KR); Park, Boik, 336-841 Asan-si (KR); Park, CheolMin, 336-841 Asan-si (KR); Lee, DongYong, 336-841 Asan-si (KR); Lee, WonJo, 336-841 Asan-si (KR); Lim, SungKeun, 336-841 Asan-si (KR)
(74) Representative: Gulde Hengelhaupt Ziebig & Schneider

(57) **Abstract**

An apparatus for easily measuring the quality of gallium nitride (GaN) in normal conditions such as an atmospheric pressure and room temperature. The apparatus includes a light source disposed above a GaN substrate and a measuring unit disposed above the GaN substrate. The light source emits light to a surface of the GaN substrate. The measuring unit measures the quality of the GaN substrate based on the spectrum of light radiated from the GaN substrate.

## Description

### CROSS REFERENCE TO RELATED APPLICATION

The present application claims priority from Korean Patent Application Number 10-2012-0069136 filed on June 27, 2012, the entire contents of which application are incorporated herein for all purposes by this reference.

### BACKGROUND OF THE INVENTION

### Field of the Invention

The present invention relates to an apparatus for measuring the quality of gallium nitride (GaN), and more particularly, to an apparatus for easily measuring the quality of GaN in normal conditions such as an atmospheric pressure and room temperature.

### Description of Related Art

Gallium nitride (GaN) is a direct transition semiconductor material that has band gap energy of 3.39eV and is available for the fabrication of light-emitting devices (LEDs) that emit light having a short wavelength. Here, it is difficult to mass-produce GaN single crystals, since a high temperature of 1,500 °C or higher and a nitrogen atmosphere of 20,000 atms are required for growing liquid crystals due to a high nitrogen vapor pressure at a melting point. In addition, it is difficult to manufacture GaN by liquid phase epitaxy (LPE), since a thin panel type crystal having a size of about 100 mm² is currently available.

Accordingly, a GaN film or substrate was grown on a heterogeneous substrate using a vapor phase growth method, such as metal organic chemical vapor deposition (MOCVD) or hydride vapor phase epitaxy (HVPE). Here, MOCVD is not applicable to the manufacture of a GaN substrate having a thickness of tens to hundreds of micrometers because of a very slow growth rate thereof even though MOCVD can produce a high-quality film. For this reason, HVPE is mainly used for the manufacture of a GaN thin film since high-speed growth is possible in HVPE.

The GaN substrate that is grown by the vapor phase growth method is used for the fabrication of LEDs after quality inspection. In the related art, for quality inspection on such a GaN substrate, scanning electron microscope-cathodoluminescence (SEM-CL) is used. However, this equipment is expensive and consumes a large amount of cost for maintenance. This equipment also needs processes of loading and unloading the GaN substrate into and from a vacuum chamber for measurement. This causes a problem in that a considerable amount of time is required in order to lower the pressure inside the vacuum chamber to about 10⁻⁶ torr or below. Since the vacuum chamber is used, the size of a GaN substrate that can be measured must be smaller than the size of the vacuum chamber. Therefore, there are a number of limitations to the measurement of the quality of GaN substrates that are grown into a variety of sizes.

The information disclosed in the Background of the Invention section is provided only for better understanding of the background of the invention, and should not be taken as an acknowledgment or any form of suggestion that this information forms a prior art that would already be known to a person skilled in the art.

### BRIEF SUMMARY OF THE INVENTION

Various aspects of the present invention provide an apparatus for measuring the quality of gallium nitride (GaN) which can easily measure the quality of GaN in normal conditions such as an atmospheric pressure and room temperature.

In an aspect of the present invention, provided is an apparatus for measuring the quality of GaN. The apparatus includes a light source disposed above a GaN substrate, the light source emitting light to a surface of the GaN substrate; and a measuring unit disposed above the GaN substrate, the measuring unit measuring the quality of the GaN substrate based on the spectrum of light radiated from the GaN substrate.

According to an embodiment of the invention, the light emitted from the light source may be ultraviolet (UV) radiation

The light may have a wavelength of 365 nm or less.

The light source may include a light-generating unit; a light-supplying unit connected to the light-generating unit, the light-supplying unit supplying light generated by the light-generating unit to the surface of the GaN substrate; and a lens unit disposed on an end of the light-supplying unit that faces the GaN substrate. The lens unit focuses the light supplied by the light-supplying unit to the surface of the GaN substrate.

The lens unit may be disposed such that a distance from the lens unit to the GaN substrate is within the range from a focal length of the lens unit minus 30 mm to the focal length plus 30 mm.

The measuring unit may include a photographing unit for taking an image of the GaN substrate; a display unit connected to the photographing unit, the display unit displaying the image transmitted from the photographing unit; and a control unit which controls the operation of the photographing unit and the display unit.

The photographing unit may be implemented as a charge-coupled device camera, the charge-coupled device camera having an optical lens in the front portion thereof.

The apparatus may further include a stage on which the GaN substrate is seated.

The apparatus may further include a conveyor belt which moves a plurality of the stages in one direction.

According to embodiments of the invention, it is possible to easily measure the quality of GaN by comparing the contrast of the spectrum of radiation from a GaN substrate when the GaN substrate is irradiated with ultraviolet (UV) radiation under normal conditions having room temperature. Since a vacuum device or the like is not necessary, it is possible to reduce the price of a product.

In addition, it is possible to easily construct a continuous inspection process for all products using a conveyor belt. It is possible to measure the quality of GaN substrates having a variety of sizes without limitations to the size of substrates that can be measured.

The methods and apparatuses of the present invention have other features and advantages which will be apparent from, or are set forth in greater detail in the accompanying drawings, which are incorporated herein, and in the following Detailed Description of the Invention, which together serve to explain certain principles of the present invention.

### BRIEF DESCRIPTION OF THE DRAWINGS

FIG. 1 is a configuration view schematically showing an apparatus for measuring the quality of GaN according to an embodiment of the invention;

FIG. 2 is a graph showing a graph showing the wavelength distribution of the light source in the apparatus for measuring the quality of GaN according to an embodiment of the invention;

FIG. 3A and FIG. 3B show images of GaN taken using the apparatus for measuring the quality of GaN according to an embodiment of the invention, in which FIG. 3A shows the images that are in specification, and FIG. 3B shows the images that are out of specification; and

FIG. 4A and FIG. 4B show images of GaN taken using an apparatus for measuring the quality of GaN of the related art.

### DETAILED DESCRIPTION OF THE INVENTION

Reference will now be made in detail to an apparatus for measuring the quality of gallium nitride of the present invention, embodiments of which are illustrated in the accompanying drawings and described below, so that a person having ordinary skill in the art to which the present invention relates can easily put the present invention into practice.

Throughout this document, reference should be made to the drawings, in which the same reference numerals and signs are used throughout the different drawings to designate the same or similar components. In the following description of the present invention, detailed descriptions of known functions and components incorporated herein will be omitted when they may make the subject matter of the present invention unclear.

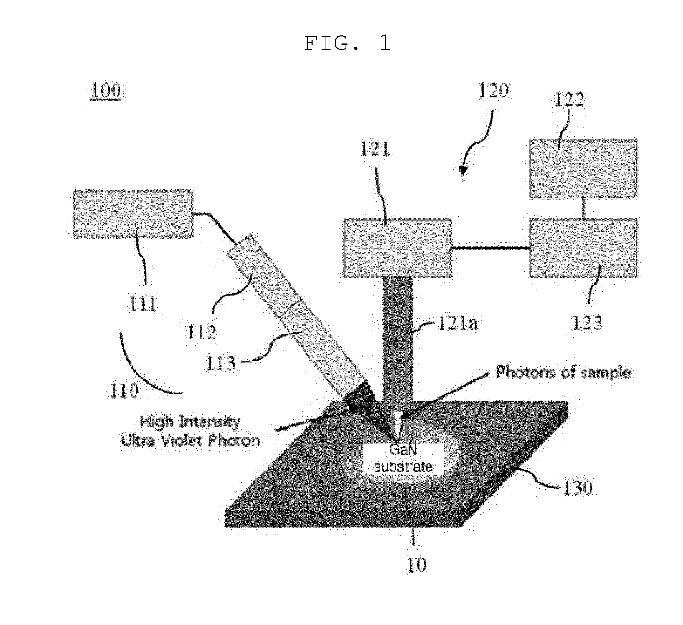

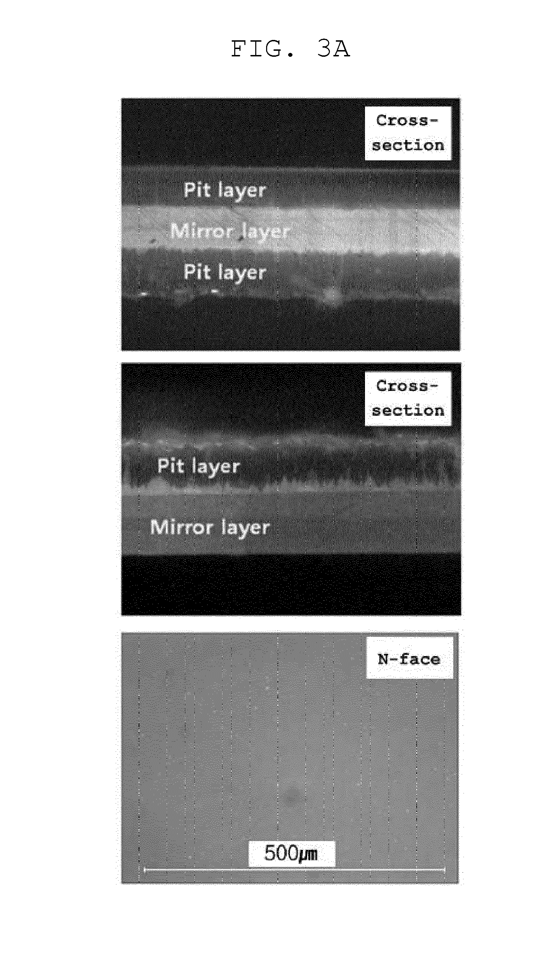

Referring to FIG. 1, an apparatus 100 for measuring the quality of GaN according to an embodiment of the invention is an apparatus that measures the quality and uniformity of a GaN substrate 10 which is grown by a vapor phase growth method such as metal organic chemical vapor deposition (MOCVD) or hydride vapor phase epitaxy (HVPE). Here, the GaN substrate 10 can have a single film structure of high-quality GaN. As shown in FIG. 3A, the GaN substrate 10 can be configured such that a low-quality GaN film having pits, or a pit layer, is layered on the top of a high-quality GaN film, or a mirror layer, or low-quality GaN films are layered on the top and the bottom of the high-quality GaN film. Referring to the low-quality GaN film layered on the bottom of the high-quality GaN film, the content ratio of nitrogen of the low-quality GaN film is higher than that of the high-quality GaN film. The low-quality GaN film is a film that is used as a base substrate when growing the GaN substrate 10, for example, a boundary layer at which the GaN substrate is to be separated from a sapphire substrate. The low-quality GaN film layered on the top of the high-quality GaN film is a film that serves as a support layer for increasing the entire thickness of the GaN substrate 10. Accordingly, the apparatus 100 for measuring the quality of GaN according to an embodiment of the invention can measure the quality of the GaN substrate 10 without limitations to the structure of the GaN substrate 10.

For this, the apparatus 100 for measuring the quality of GaN according to an embodiment of the invention includes a light source 110 and a measuring unit 120.

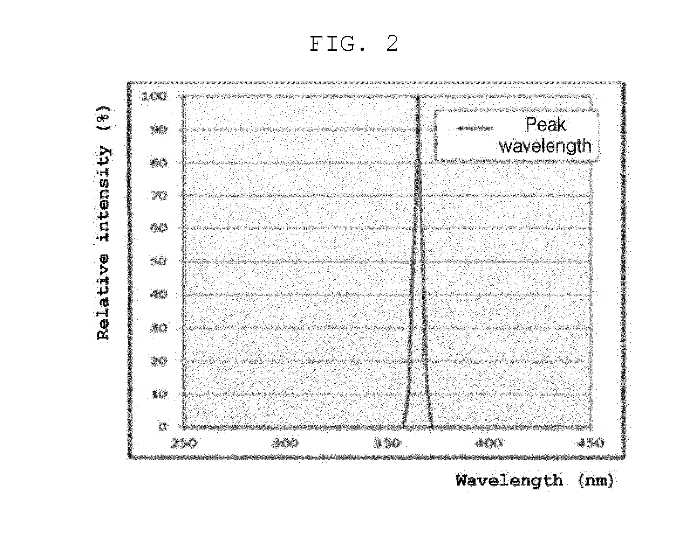

The light source 110 is a device which irradiates the GaN substrate 10 with light so that the quality and uniformity of the GaN substrate 10 can be measured by comparing the contrast of the spectrum of the light radiated from the GaN substrate 10. For this, the light source 110 is disposed above the GaN substrate 10. The light that is emitted to the GaN substrate from the light source 110 can be ultraviolet (UV) radiation. As shown in FIG. 2, it is preferred that the light have the greatest relative intensity at a wavelength of 365 nm or a shorter wavelength. This is because the band gap of GaN is 3.4 eV, which becomes 364.4 nm when converted into the wavelength of light, and a light source having the greatest intensity at a wavelength of 364.4 nm is required in order to excite electrons of GaN in the valence band into the conduction band.

The light source 110 includes a light-generating unit 111, a light-supplying unit 112 and a lens unit 113. The light-generating unit 111 generates light having a wavelength of 365 nm from a supply voltage, and can be implemented as, for example, a lamp. The light-supplying unit 112 is a device that is connected to the light-generating unit 111 and supplies or transfers the light generated by the light-generating unit 111 to the GaN substrate 10. The light-supplying unit 112 can be implemented as, for example, an optical fiber. The lens unit 113 is disposed at one end of the light supply unit 112 that faces the GaN substrate 10. The lens unit 113 serves to focus light that passes through the light-supplying unit 112 to the surface of the GaN substrate, thereby improving the efficiency of the light source 110. For this, the lens unit 113 can be configured as a convex lens. In addition, it is preferred that the distance from the lens unit 113 to the GaN substrate 10 be within the range from the focal length of the lens unit 113 minus 30 mm to the focal length plus 30 mm in order to maximize the light focusing effect.

The measuring unit 120 is a device which measures the quality and uniformity of the GaN substrate 10 based on the spectrum of the light emitted from the GaN substrate 10. The measuring unit 120 is disposed above the light source 110, adjacent to the light source 110.

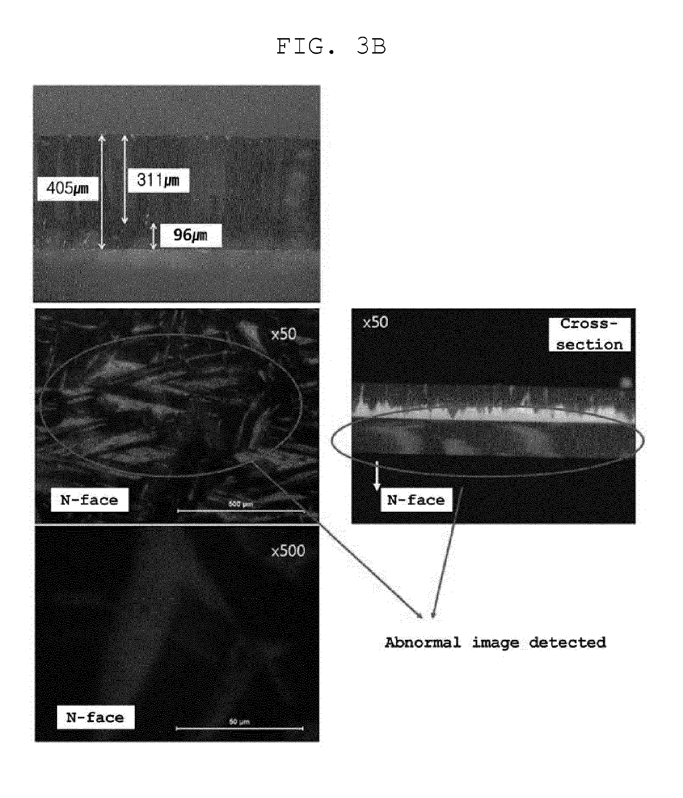

Electrons that have been excited into the conduction band by the light having a wavelength of 365 nm emitted from the light source 110 are recombined to the valence band, thereby generating photons. Here, in the case of the GaN substrate 10 having a multilayer structure shown in FIG. 3A and FIG. 3B, different band structures of individual layers lead to a difference in photons that are generated. The measuring unit 120 measures the quality and uniformity of the GaN substrate by comparing such a difference. Here, when the GaN substrate 10 is formed as a single layer, the quality and uniformity of the GaN substrate 10 are measured by confirming whether or not a uniform spectrum occurs across the entire area.

For this, the measuring unit 120 includes photographing unit 121, a display unit 122 and a control unit 123. The photographing unit 121 is a device that takes an image of the GaN substrate 10 which radiates light after being irradiated with light from the light source 110. The photographing unit 121 can be implemented as, for example, a charge-coupled device (CCD) camera. Here, an optical lens 121a can be disposed on the front surface of the CCD camera. In addition, the display unit 122 is a device that is connected to the photographing unit 121, and displays an image transmitted from the photographing unit 121. The display unit 122 can be implemented as, for example, a monitor. An operator visually observes the image of the GaN substrate 10 displayed by the display unit 122, and then determines whether the image is in or out of specification. The control unit is a device which controls the operation of the photographing unit 121 and the display unit 122, and can be implemented as, for example, a computer. Accordingly, the operator can take an image of the GaN substrate 10 under the control of the control unit 123, display the image on the display unit 122, and determine in real time the quality and uniformity of the GaN substrate 10. In addition, the operator can store the image of the GaN substrate 10 and use the stored image as a comparison data when measuring the quality of another GaN substrate 10, thereby improving reliability in measuring the quality of the GaN substrate 10.

According to an embodiment of the invention, the GaN substrate 10 can be seated on a stage 130. In the related art, the quality of a GaN substrate is measured by loading the GaN substrate into a vacuum chamber. Therefore, the size of GaN substrates that can be measured is limited by the size of the vacuum chamber. In contrast, according to this embodiment of the invention, it is possible to simply conduct quality measurement by placing the GaN substrate 10 on the stage 130. Therefore, it is possible to measure the quality of GaN substrates having a variety of sizes without limitations to the size of GaN substrates that can be measured. In addition, the apparatus 100 for measuring the quality of GaN according to an embodiment of the invention can include a conveyor belt (not shown) which transports the stage 130 in one direction. The conveyor belt (not shown) is operated after it is loaded with a plurality of stages 130 on each of which the GaN substrate 10 is seated. As the conveyor belt (not shown) moves, the front stage 130 is positioned in a measuring zone in which the light source 110 and the measuring unit 120 are disposed. The conveyor belt (not shown) is stopped at that position, and the quality of the GaN substrate 10 is measured. When the quality measurement is completed, the conveyor belt (not shown) is operated again, so that the next stage 130 is positioned in the measuring zone. In this fashion, the conveyor belt (not shown) makes it possible to continuously inspect all of products, thereby significantly decreasing the quality inspection time.

Since the apparatus 100 for measuring the quality of GaN according to an embodiment of the invention measures the quality of the GaN substrate 10 under normal conditions of an atmospheric pressure and room temperature, it is possible to more easily measure the quality of the GaN substrate than any measuring apparatus of the related art. In addition, since a vacuum device or the like is not necessary, it is possible to reduce the price of a product.

FIG. 3A and FIG. 3B show images of GaN taken using the apparatus for measuring the quality of GaN according to an embodiment of the invention, in which FIG. 3A shows the images that are in specification, and FIG. 3B shows the images that are out of specification. Specifically, the top part of FIG. 3A shows the image of a GaN substrate in which low-quality GaN films having pits, or pit layers, are layered on the top and bottom of a high-quality GaN film, or a mirror layer, the middle part of FIG. 3A shows the image of the GaN substrate in which a low-quality GaN film is layered on the top of a high-quality GaN film, and the bottom part of FIG. 3A shows the image of the N-face of the GaN substrate. Referring to these images, it can be appreciated that the contrast and interface between the layers are clear. From this, the manufactured GaN substrate can be determined to be in specification. In contrast, referring to the images in FIG. 3B, the contrast and interface between layers are unclear, and thus the manufactured GaN substrate is determined to be out of specification.

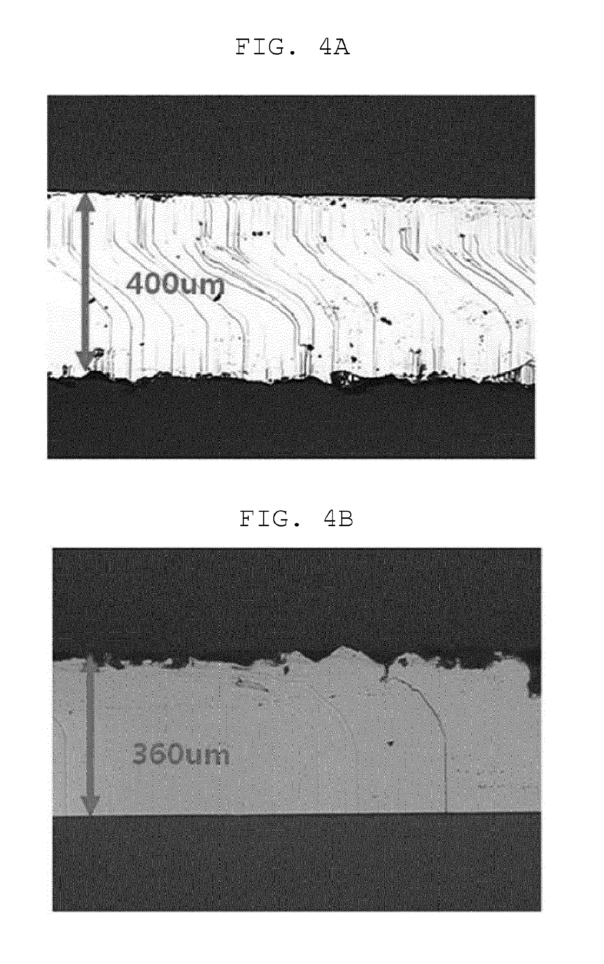

FIG. 4A and FIG. 4B show images of GaN taken using an apparatus for measuring the quality of GaN of the related art. The images of GaN substrates that have the same structures as those in FIG. 3A and FIG. 3B were taken using a microscope. As shown in FIG. 4A and FIG. 4B, when measuring the quality of the GaN substrates using the common microscope, it is only possible to measure the thickness of layers. It is difficult to determine whether or not each layer is properly deposited.

The foregoing descriptions of specific exemplary embodiments of the present invention have been presented with respect to the drawings. They are not intended to be exhaustive or to limit the invention to the precise forms disclosed, and obviously many modifications and variations are possible for a person having ordinary skill in the art in light of the above teachings.

It is intended therefore that the scope of the invention not be limited to the foregoing embodiments, but be defined by the Claims appended hereto and their equivalents.

## Claims

1. An apparatus for measuring a quality of gallium nitride comprising:
a light source disposed above a gallium nitride substrate, wherein the light source emits light to a surface of the gallium nitride substrate; and
a measuring unit disposed above the gallium nitride substrate, wherein the measuring unit measures a quality of the gallium nitride substrate based on a spectrum of light radiated from the gallium nitride substrate.

2. The apparatus of claim 1, wherein the light emitted from the light source is ultraviolet radiation.

3. The apparatus of claim 2, wherein the light has a wavelength of 365 nm or less.

4. The apparatus of claim 1, wherein the light source includes:
a light-generating unit;
a light-supplying unit connected to the light-generating unit, wherein the light-supplying unit supplies light generated by the light-generating unit to the surface of the gallium nitride substrate; and
a lens unit disposed on an end of the light-supplying unit that faces the gallium nitride substrate, wherein the lens unit focuses the light supplied by the light-supplying unit to the surface of the gallium nitride substrate.

5. The apparatus of claim 4, wherein the lens unit is disposed such that a distance from the lens unit to the gallium nitride substrate is within a range from a focal length of the lens unit minus 30 mm to the focal length plus 30 mm.

6. The apparatus of claim 1, wherein the measuring unit includes:
a photographing unit for taking an image of the gallium nitride substrate;
a display unit connected to the photographing unit, wherein the display unit displays the image transmitted from the photographing unit; and
a control unit which controls operations of the photographing unit and the display unit.

7. The apparatus of claim 6, wherein the photographing unit comprises a charge-coupled device camera, the charge-coupled device camera having an optical lens in a front portion thereof.

8. The apparatus of claim 1, further comprising a stage on which the gallium nitride substrate is seated.

9. The apparatus of claim 8, further comprising a conveyor belt which moves a plurality of the stages in one direction.
